# FASCICULE DE BREVET EUROPEEN

(11) **EP 1 236 492 B1**
(45) Date de publication et mention de la délivrance du brevet: **21.01.2004**
(21) Numéro de dépôt: 02290480.9
(22) Date de dépôt: 28.02.2002
(51) Int. Cl.: B01D 29/96, B01D 35/30

(54) **Carter étanche à fermeture quart de tour**
Hermetisches Gehäuse mit einem Viertelumdrehungsverschluss
Leakproof housing with quarter-turn closure

(30) Priorité: 01.03.2001 FR 0102779
(43) Date de publication de la demande: 04.09.2002
(73) Titulaire: HISPANO-SUIZA, 92700 Colombes (FR)
(72) Inventeur: Martin, Michel Jean, 91180 Saint-Germain Les Arpajon (FR); Rouix, Philippe Roger, 77360 Vaires sur Marne (FR)
(74) Mandataire: Berrou, Paul

(56) Documents cités:
- EP-A- 0 580 501
- FR-A- 2 662 427
- US-A- 3 860 136
- US-A- 4 495 072
- US-A- 5 325 981

## Description

L'invention concerne un carter étanche, en particulier pour filtre à fluide, comportant un corps de carter présentant un orifice à l'une des ses extrémités, un couvercle susceptible d'obturer ledit orifice de manière étanche, des moyens de blocage du couvercle sur ledit corps de carter et des moyens de verrouillage/déverrouillage desdits moyens de blocage.

Elle s'applique notamment dans le domaine de l'aéronautique sur des systèmes destinés à la protection d'un circuit d'huile ou d'un circuit d'alimentation en carburant d'une turbomachine. Il est nécessaire de protéger le circuit de toute contamination externe qui peut provenir des différents organes disposés le long du circuit, comme un réservoir ou bien une pompe par exemple, qui peuvent se détériorer et engendrer des particules contaminant le fluide.

On connaît des systèmes étanches pour lesquels l'étanchéité est obtenue en assemblant un carter et un couvercle à l'aide de vis et filets auto-freinants formés dans ledit carter.

Cependant, ces systèmes nécessitent le vissage/dévissage de vis lors des opérations de maintenance, en particulier pour changer le filtre, ce qui est inévitablement long. De plus, la répétition de ces opérations de montage/démontage du couvercle provoque dans le temps une détériorisation de l'implantation des filets auto-freinants pouvant entraîner le remplacement du carter.

On connaît également par US 3 860 136 A un récipient dont le couvercle assure une sécurité de manipulation. Le verrouillage est assuré par un disque disposé entre un bouchon et une face d'appui du récipient, le disque 5 assurant également l'étanchéité. Des moyens de blocage à baïonnette sont utilisés.

US 5 325 981 A concerne un bouchon de réservoir comportant une tige centrale qui porte des branches latérales assurant le verrouillage.

Le but de la présente invention est de proposer un carter étanche qui simplifie le montage/démontage du couvercle et le remplacement du filtre, et qui diminue le temps d'immobilisation de la turbomachine pendant cette opération de maintenance.

Ce but est atteint selon l'invention du fait des moyens de blocage qui comprennent une pluralité de secteurs mâles radiaux formés sur une première extrémité du couvercle susceptibles de coulisser dans une pluralité de rainures ménagées dans ledit orifice et une pluralité de secteurs mâles radiaux formés dans ledit orifice sous lesquelles sont susceptibles de coulisser une pluralité de rainures ménagées dans ledit couvercle, lesdits moyens de fermeture formant un assemblage baïonnette, et par le fait que les moyens de verrouillage/déverrouillage comportent une pluralité de languettes montées axialement mobiles sur ledit couvercle et disposées entre les secteurs mâles du couvercle, chaque languette étant destinée à loger dans un interstice séparant deux extrémités adjacentes de deux secteurs mâles radiaux de l'orifice dudit corps de carter pour immobiliser le couvercle en position de blocage.

Grâce à ce système d'assemblage baïonnette, le couvercle se monte et se démonte très facilement par simple rotation. Lorsque les secteurs mâles et les rainures formés sur le couvercle et le corps de carter sont au nombre de deux, il suffit de faire tourner le couvercle d'un quart de tour pour le bloquer sur le corps de carter ou le libérer.

Avantageusement, les languettes sont sollicitées vers la position de verrouillage par des moyens élastiques.

Les languettes sont plaquées élastiquement contre le corps de carter lorsque le couvercle est en position de verrouillage, permettant de bloquer le couvercle en rotation.

Avantageusement, une deuxième extrémité du couvercle comporte une anse.

Cette anse permet une bonne prise en main du couvercle et facilite ainsi l'action d'amenée et de rotation du couvercle sur le corps de carter.

Les languettes sont avantageusement solidaires d'une poignée de manoeuvre située au voisinage de l'anse.

Avantageusement, les moyens élastiques sont interposés entre l'anse et la poignée de manoeuvre.

Ainsi, il suffit d'appuyer la poignée de manoeuvre contre l'anse pour dégager les languettes.

Les languettes et la poignée de manoeuvre sont avantageusement formées sur une bague concentrique au couvercle.

Cette bague permet de regrouper les languettes et les moyens élastiques sur un seul et même organe facilement réalisable.

Avantageusement, le carter comporte en outre un bouchon de vidange.

Ce bouchon de vidange disposé de manière à bloquer axialement le couvercle et la bague permet d'éviter tout risque de démontage intempestif.

Avantageusement, l'étanchéité est assurée par un joint torique positionné entre l'orifice et le couvercle.

Le joint torique peut être logé dans une gorge annulaire formée soit dans l'orifice du corps de carter, soit dans le couvercle, selon que le couvercle pénètre dans ledit orifice ou qu'il entoure ledit orifice.

D'autres caractéristiques et avantages de l'invention ressortiront à la lecture de la description suivante faite à titre d'exemple non limitatif et en référence aux dessins annexés dans lesquels :
- la figure 1 est une vue éclatée en perspective représentant l'invention démontée,
- la figure 2 est une vue de dessus du carter étanche fermé,
- la figure 3 est une coupe brisée de la figure 2 selon III-III, et
- la figure 4 est une vue en perspective du carter étanche partiellement arrachée.

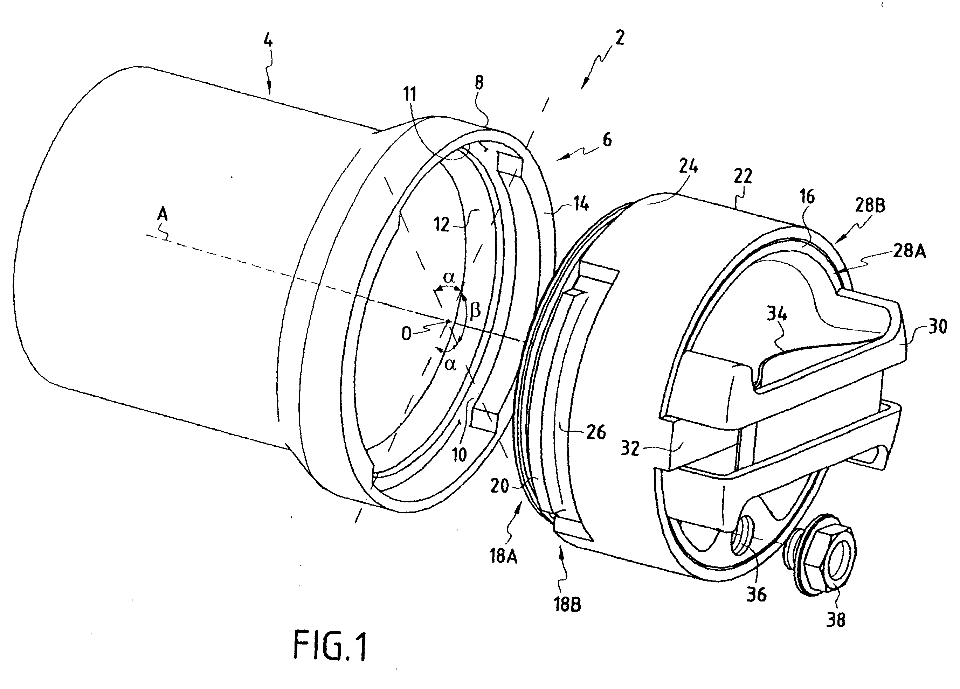

La figure 1 montre l'ensemble des éléments formant un carter étanche 2 destiné à contenir un filtre à fluide, par exemple à carburant ou à huile, non représenté.

Le carter étanche 2 comprend un corps de carter 4, de préférence cylindrique autour d'un axe A, présentant à une première extrémité 8 un orifice 6 qui peut être légèrement évasé. Cet orifice 6 est circulaire et concentrique avec le corps de carter 4.

Une rainure annulaire 10, présentant un diamètre intérieur supérieur ou égal à celui dudit orifice 6 est ménagée dans la face interne de l'orifice 6, entre un épaulement 12 circulaire formé dans ledit orifice 6, et un secteur mâle 14. Selon le mode de réalisation, le carter étanche 2 comporte deux secteurs mâles 14 diamétralement opposés et disposés dans l'embouchure de l'orifice 6. Ces secteurs mâles, qui sont chacun en forme d'arc de cercle dont le centre O est situé sur l'axe A, présentent un angle au sommet β, de préférence égal à 90°. Selon le nombre de secteurs mâles 14, l'angle au sommet α est de valeur différente. L'espace compris entre deux secteurs mâles 14 adjacents constitue des interstices 11 en forme d'arc de cercle de centre O et d'angle au sommet α, de préférence égal à 90°. La somme de l'ensemble des angles α et β est égal à 360°. Les interstices 11 ont un diamètre sensiblement égal à celui de la rainure 10.

La figure 1 montre un couvercle 16 comportant à une première extrémité 18A deux secteurs mâles 20 en arc de cercle dont le centre O' est situé sur l'axe A et présente un angle au sommet inférieur ou égal à l'angle au sommet α. Ledit couvercle 16 comporte en outre une bague 22 concentrique audit couvercle 16 et entourant ce dernier. Cette bague 22 présente à une première extrémité 18B deux languettes 24 en arc de cercle dont le centre O' est situé sur l'axe A et présente un angle au sommet inférieur ou égal à l'angle au sommet α. Lesdites languettes 24 sont destinées à pénétrer dans les interstices 11.

La bague 22 et le couvercle 16 sont agencés de sorte que les languettes 24 sont placées entre les secteurs mâles 20. L'espace compris entre l'extrémité 18A de la bague 22 et lesdits secteurs mâles 20 forme des rainures 26 susceptibles de coulisser dans les secteurs mâles 14 formés dans le corps de carter 4.

Le couvercle 16, respectivement la bague 22, présente à une autre extrémité 28A, respectivement 28B, une anse 30, respectivement une poignée de manoeuvre 32. Une lame élastique 34 disposée entre ladite anse 30 et la poignée de manoeuvre 32.

Le couvercle 16 comporte un taraudage 36 destiné à coopérer avec un bouchon de vidange étanche 38 permettant de maintenir axialement la bague 22 par rapport au couvercle 16..

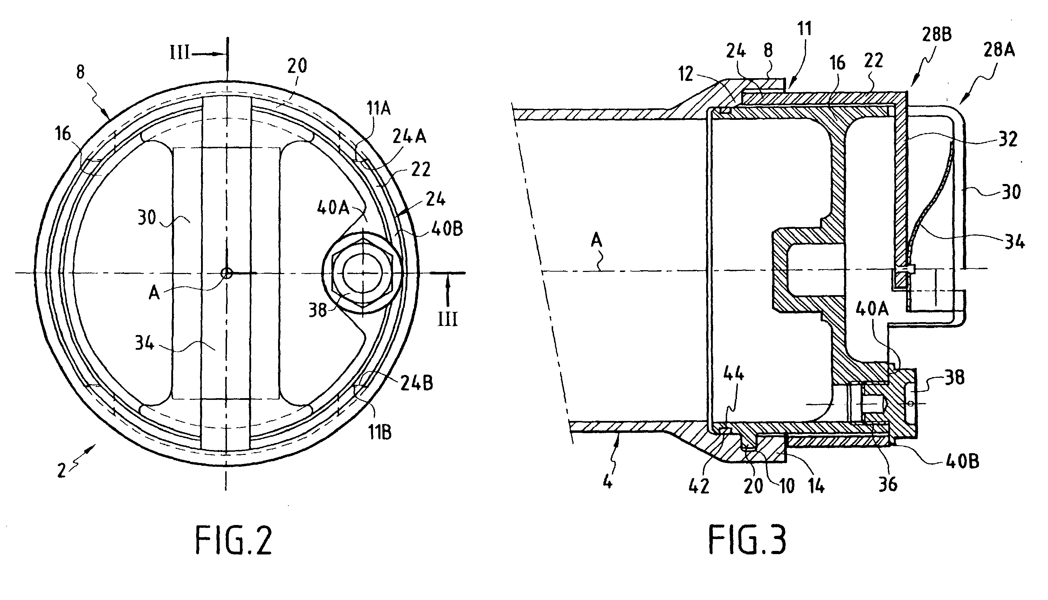

La figure 2 montre le carter 2 monté avec le couvercle 16 en position verrouillée. Le bouchon de vidange étanche 38 est vissé dans le taraudage 36 jusqu'à venir en contact respectivement avec chacune des surfaces frontales 40A et 40B, du couvercle 16 et de la bague 22.

Pour fermer le carter étanche 2, l'utilisateur enlève le bouchon de vidange 38 et prend le couvercle 16 par l'anse 30 en passant les doigts de sa main sous la poignée de manoeuvre 32 et oriente ledit couvercle de manière à mettre les secteurs mâles 20 en regard des interstices 11.

Dans cette position, les languettes 24 sont en regard des secteurs mâles 14, il est donc nécessaires de ramener lesdites languettes 24 vers l'extrémité 28A du couvercle 16. Pour ce faire, l'utilisateur appui sur la poignée de manoeuvre 32 de manière à écraser la lame élastique 34 et diminuer la distance comprise entre ladite poignée de manoeuvre 32 et l'anse 30.

L'utilisateur maintenant la poignée de manoeuvre 32 contre l'anse 30 peut à présent faire coulisser axialement les secteurs mâles 20 le long des interstices 11. Il lui suffit ensuite simplement de faire pivoter sa main d'un quart de tour afin de faire pivoter lesdits secteurs mâles 20 dans la rainure 10 et de lâcher la poignée de manoeuvre 32. La lame élastique 34 est ainsi relâchée et va permettre aux languettes 24 de pénétrer dans les interstices 11 et venir en appui contre l'épaulement 12. L'ensemble secteur mâle 20 et rainure 10 constitue dans cette position un assemblage baïonnette qui est bloqué en rotation par les languettes 24. En effet, en cas de rotation intempestive, une extrémité 24A, respectivement 24B, de chaque languette 24, vient en appui contre une extrémité 11A, respectivement 11B, de chaque interstice 11, emprisonnant les secteurs mâles 20 du couvercle 16 logés dans les rainures 10 du corps de carter 4 sous les secteurs mâles 14 dudit corps de carter 4.

Afin d'empêcher tout risque de glissement axial de la bague 22 par rapport au couvercle 16, le bouchon de vidange 38 est vissé dans le taraudage 36 jusqu'à venir en contact respectivement avec chacune des surfaces frontales 40A et 40B, du couvercle 16 et de la bague 22.

Un joint torique 42, représenté sur la figure 3, est disposé au préalable dans une gorge annulaire 44, de préférence formée à la périphérie du couvercle 16 au voisinage de son extrémité 18A.

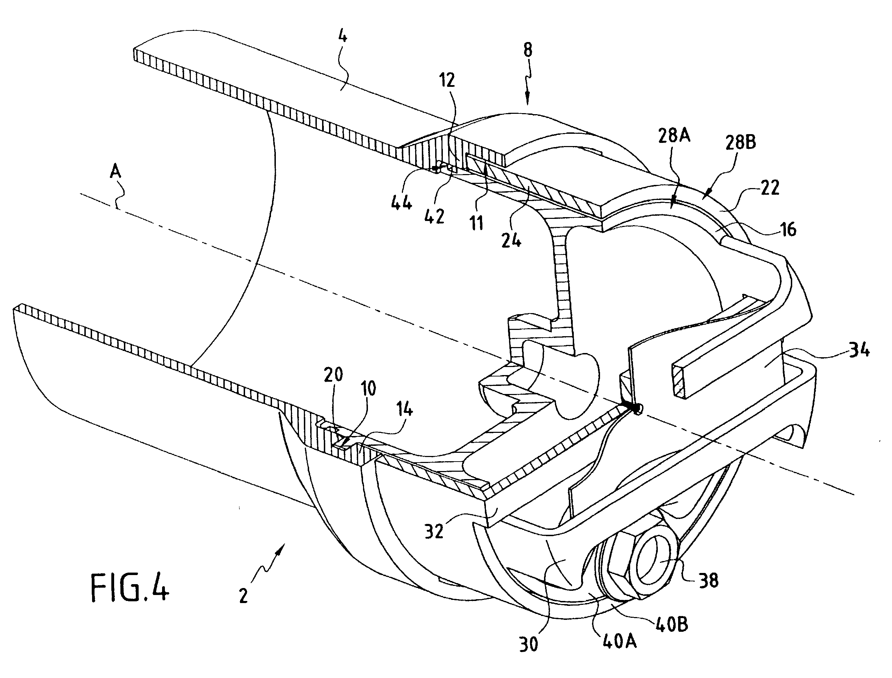

La figure 4 montre le carter étanche 2 avec le couvercle 16 en position verrouillée.

Pour démonter le couvercle 16, l'utilisateur procède de manière inverse au montage précité. Il commence par dévisser entièrement le bouchon de vidange 38, puis appuie la poignée de manoeuvre 32 contre l'anse 30 pour dégager les languettes 24 hors des interstices 11, et effectue un quart de tour afin de retirer les rainures 20 hors des interstices 11. Enfin, après avoir entièrement retiré le couvercle 16 de l'orifice 6 du corps de carter 4, il peut relâcher la poignée de manoeuvre 32.

## Revendications

1. Carter étanche (2), en particulier pour filtre à fluide, comportant un corps de carter (4) présentant un orifice (6) circulaire à l'une des ses extrémités (8), un couvercle (16) susceptible d'obturer ledit orifice (6) de manière étanche, des moyens de blocage (10, 20 ; 14, 26) du couvercle (16) sur ledit corps de carter (4) et des moyens de verrouillage/déverrouillage (11, 24, 24A ; 24B) desdits moyens de blocage (10, 20 ; 14, 26),
les moyens de blocage (10, 20; 14, 26) comprenant une pluralité de secteurs mâles radiaux (20) formés sur une première extrémité (18A) du couvercle susceptibles de coulisser dans une pluralité de rainures (10) ménagées dans ledit orifice (6) et une pluralité de secteurs mâles radiaux (14) formés dans ledit orifice (6) susceptibles de coulisser dans une pluralité de rainures (26) ménagées dans ledit couvercle (16), lesdits moyens de blocage formant un assemblage baïonnette,
**caractérisé par le fait que**
les moyens de verrouillage/déverrouillage (11, 24, 24A ; 24B) comportent une pluralité de languettes (24) appartenant à une bague (22) entourant ledit couvercle (16) et disposées entre les secteurs mâles (20) du couvercle (16), chaque languette (24) étant destinée à loger dans un interstice (11) séparant deux extrémités adjacentes de deux secteurs mâles radiaux (14) de l'orifice (6) dudit corps de carter (4) pour immobiliser le couvercle (16) en position de blocage.

2. Carter étanche (2) selon la revendication 1, **caractérisé par le fait que** les languettes (24) sont sollicitées vers la position de verrouillage par des moyens élastiques (34).

3. Carter étanche (2) selon la revendication 1 ou 2, **caractérisé par le fait qu'**une deuxième extrémité (28A) du couvercle comporte une anse (30).

4. Carter étanche (2) selon la revendication 3, **caractérisé par le fait que** les languettes (24) sont solidaires d'une poignée de manoeuvre (32) située au voisinage de l'anse (30).

5. Carter étanche (2) selon la revendication 4, **caractérisé par le fait que** les moyens élastiques (34) sont interposés entre l'anse (30) et la poignée de manoeuvre (32).

6. Carter étanche (2) selon l'une quelconque des revendications 1 à 5, **caractérisé par le fait que** les languettes (24) et la poignée de manoeuvre (32) sont formées sur une bague (22) concentrique au couvercle (16).

7. Carter étanche (2) selon la revendication 6, **caractérisé par le fait qu'**il comporte en outre un organe de sécurité (38) en contact avec les surfaces frontales de la bague (22) et du couvercle (16).

8. Carter étanche (2) selon la revendication 7, **caractérisé par le fait que** l'organe de sécurité comporte un élément fileté, en particulier un bouchon de vidange étanche (38), susceptible de coopérer soit avec la bague (22), soit avec le couvercle (16).

9. Carter étanche (2) selon la revendication 7, **caractérisé par le fait que** l'étanchéité est assurée par un joint torique (42) positionné entre l'orifice et le couvercle.

## Claims

1. Leakproof housing (2), particularly for a fluid filter, comprising a housing body (4) exhibiting a circular orifice (6) at one of its ends (8), a lid (16) able to plug the said orifice (6) in a sealed way, means (10, 20; 14, 26) of immobilizing the lid (16) on the said housing body (4) and means (11, 24, 24a; 24b) for locking/unlocking the said immobilizing means (10, 20; 14, 26),
the immobilizing means (10, 20; 14, 26) comprising a plurality of radial male sectors (20) formed on the first end (18A) of the lid and able to slide in a plurality of grooves (10) formed in the said orifice (6) and a plurality of radial male sectors (14) formed in the said orifice (6) and able to slide in a plurality of grooves (26) formed in the said lid (16), the said immobilizing means forming a bayonet fitting,
**characterized in that**
the locking/unlocking means (11, 24, 24A; 24B) comprise a plurality of tabs (24) belonging to a ring (22) surrounding the said lid (16) and arranged between the male sectors (20) of the lid (16), each tab (24) being intended to be accommodated in a gap (11) separating two adjacent ends of two radial male sectors (14) of the orifice (6) from the said housing body (4) to immobilize the lid (16) in the immobilizing position.

2. Leakproof housing (2) according to Claim 1, **characterized in that** the tabs (24) are urged towards the locked position by elastic means (34).

3. Leakproof housing (2) according to Claim 1 or 2, **characterized in that** a second end (28A) of the lid has a bow (30).

4. Leakproof housing (2) according to Claim 3, **characterized in that** the tabs (24) are secured to an operating handle (32) situated near the bow (30).

5. Leakproof housing (2) according to Claim 4, **characterized in that** the elastic means (34) are inserted between the bow (30) and the operating handle (32).

6. Leakproof housing (2) according to any one of Claims 1 to 5, **characterized in that** the tabs (24) and the operating handle (32) are formed on a ring (22) concentric with the lid (16).

7. Leakproof housing (2) according to Claim 6, **characterized in that** it further comprises a safety member (38) in contact with the frontal surfaces of the ring (22) and of the lid (16).

8. Leakproof housing (2) according to Claim 7, **characterized in that** the safety member comprises a threaded element, particularly a sealed drain plug (38) able to collaborate either with the ring (22) or with the lid (16).

9. Leakproof housing (2) according to Claim 7, **characterized in that** sealing is afforded by an O-ring seal (42) positioned between the orifice and the lid.

## Patentansprüche

1. Hermetisches Gehäuse (2), insbesondere ein Gehäuse für Flüssigkeitsfilter, bestehend aus einem Gehäusekörper (4), der an einem seiner Enden (8) eine kreisförmige Öffnung (6), ferner einen Deckel (16) zum hermetischen Verschließen dieser Öffnung (6), Mittel zum Sperren (10, 20; 14, 26) des Deckels (16) an diesem Gehäusekörper (4) sowie Mittel zum Verriegeln/Entriegeln (11, 24, 24A; 24B) dieser Sperrmittel (10, 20; 14, 26) aufweist, wobei die Sperrmittel (10, 20; 14, 26) aus einer Vielzahl von vorspringenden, radialen Sektoren (20) bestehen, die an einem ersten Ende (18A) des Deckels gebildet sind und geeignet sind, in einer Vielzahl von Rillen (10) zu gleiten, die in dieser Öffhung (6) ausgeführt sind, und aus einer Vielzahl von vorspringenden, radialen Sektoren (14) bestehen, die in dieser Öffnung (6) gebildet sind und unter denen eine Vielzahl von Rillen (26), die in diesem Deckel (16) ausgeführt sind, gleiten kann, wobei diese Sperrmittel eine Bajonettverbindung bilden,
**dadurch gekennzeichnet,**
**dass** die Verriegelungs-/Entriegelungsmittel (11, 24, 24A; 24B) aus einer Vielzahl von Laschen (24) bestehen, die zu einem Ring (22) gehören, der diesen Deckel umschließt, und zwischen den vorspringenden Sektoren (20) des Deckels (16) angeordnet sind, wobei jede Lasche (24) dazu bestimmt ist, in einem Zwischenraum (11) zu sitzen, der zwei benachbarte Enden von zwei vorspringenden, radialen Sektoren (14) der Öffnung (6) dieses Gehäusekörpers (4) voneinander trennt, um den Deckel (16) in Sperrstellung festzustellen.

2. Hermetisches Gehäuse (2) nach Anspruch 1,
**dadurch gekennzeichnet,**
**dass** die Laschen (24) durch Federmittel (34) zur Verriegelungsstellung hin belastet werden.

3. Hermetisches Gehäuse (2) nach Anspruch 1 oder 2,
**dadurch gekennzeichnet,**
**dass** ein zweites Ende (28A) des Deckels einen Bügel (30) aufweist.

4. Hermetisches Gehäuse (2) nach Anspruch 3,
**dadurch gekennzeichnet,**
**dass** die Laschen (24) fest mit einem Handgriff (32) verbunden sind, der sich im Bereich des Bügels (30) befindet.

5. Hermetisches Gehäuse (2) nach Anspruch 4,
**dadurch gekennzeichnet,**
**dass** die Federmittel (34) zwischen dem Bügel (30) und dem Handgriff (32) angeordnet sind.

6. Hermetisches Gehäuse (2) nach einem der Ansprüche 1 bis 5,
**dadurch gekennzeichnet,**
**dass** die Laschen (24) und der Handgriff (32) auf einem zum Deckel (16) konzentrischen Ring (22) ausgeführt sind.

7. Hermetisches Gehäuse (2) nach Anspruch 6,
**dadurch gekennzeichnet,**
**dass** es ferner ein Sicherheitsorgan (38) aufweist, das sich in Kontakt mit den Vorderseiten des Rings (22) und des Deckels (16) befindet.

8. Hermetisches Gehäuse (2) nach Anspruch 7,
**dadurch gekennzeichnet,**
**dass** das Sicherheitsorgan ein Gewindeelement aufweist, insbesondere einen dichten Entleerungsverschluss (38), der geeignet ist, mit dem Ring (22) oder mit dem Deckel (16) zusammenzuwirken.

9. Hermetisches Gehäuse (2) nach Anspruch 7,
**dadurch gekennzeichnet,**
**dass** die Dichtigkeit durch eine O-Ring-Dichtung (42) gewährleistet wird, die zwischen der Öffnung und dem Deckel angeordnet ist.
